# EUROPÄISCHE PATENTSCHRIFT

(11) **EP 2 396 135 B1**
(45) Veröffentlichungstag und Bekanntmachung des Hinweises auf die Patenterteilung: **12.03.2014**
(21) Anmeldenummer: 10702088.5
(22) Anmeldetag: 26.01.2010
(51) Int. Cl.: B23F 5/04, B23F 19/00, B23F 19/12, B23F 21/02

(54) **VERFAHREN ZUR BESTIMMUNG DES PROFILS EINER IM WESENTLICHEN EVOLVENTISCHEN SCHLEIFSCHNECKE**
METHOD FOR DETERMINING THE PROFILE OF A SUBSTANTIALLY INVOLUTE WORM GRINDING WHEEL
PROCÉDÉ DE DÉTERMINATION DU PROFIL D'UNE VIS SANS FIN DE RECTIFICATION, SENSIBLEMENT À DÉVELOPPANTE

(30) Priorität: 11.02.2009 DE 102009000774
(43) Veröffentlichungstag der Anmeldung: 21.12.2011
(73) Patentinhaber: ZF Friedrichshafen AG, 88038 Friedrichshafen (DE)
(72) Erfinder: YAKARIA, Herman, 88085 Langenargen (DE); BLEICHER, Oliver, 88045 Friedrichshafen (DE)
(86) Internationale Anmeldenummer: PCT/EP2010/050840
(87) Internationale Veröffentlichungsnummer: WO 2010/091946

(56) Entgegenhaltungen:
- EP-A1- 0 278 512
- US-A1- 2008 292 420
- US-B1- 6 217 409

## Beschreibung

Die Erfindung betrifft ein Verfahren zur Bestimmung des Profils einer im Wesentlichen evolventischen Schleifschnecke nach dem Oberbegriff des Patentanspruches.

Es ist bekannt, schräg verzahnte Zahnräder durch Wälzschleifen mit einem Werkzeug in Form einer im Wesentlichen evolventischen Schnecke fein zu bearbeiten. Der Normalschnitt der Schleifschnecke weist dabei ein trapezförmiges Zahnstangenprofil auf, welches in die Zahnlücken des zu schleifenden Zahnrades eingreift. Zur Erzielung einer hohen Flankentragfähigkeit und eines guten Geräuschverhaltens werden am Evolventenprofil und an der Zahnflankenlinie Korrekturen vorgenommen, insbesondere eine Kopf- und/oder Fußrücknahme sowie eine Breitenballigkeit. Die Veränderung der Flankenlinie in Breitenrichtung des Zahnrades (Breitenballigkeit) erfolgt beim kontinuierlichen Wälzschleifen durch Änderung des Achsabstandes zwischen Werkzeug (Schleifschnecke) und Werkstück (Zahnrad) während des axialen Vorschubes der Schleifschnecke. Da die Eingriffslinie zwischen Werkzeug und Werkstück nicht in einer zur Werkstückachse senkrechten Ebene (so genannte Stimschnittebene) liegt, ergibt sich bei der Erzeugung von Breitenballigkeiten eine Verzerrung bzw. Verwindung des Profils, insbesondere im Einlauf- und Auslaufbereich einer Zahnlücke - diese Verwindung bzw. Verzerrung wird als Verschränkung bezeichnet. Durch derartige Verschränkungen bei schräg verzahnten Zahnrädern werden die Eingriffsverhältnisse der Radpaarung und das Tragbild beeinflusst und somit auch das Last- und Geräuschverhalten. Der Betrag der verfahrensbedingten Verschränkungen ist wesentlich abhängig vom Schrägungswinkel und der Breitenballigkeit. Die Verschränkungen sind umso größter, je größer der Schrägungswinkel und die Breitenballigkeit sind.

Durch die DE 37 04 607 A1 wurde ein Verfahren zur Eliminierung der verfahrensbedingten Verschränkungen bekannt. Dabei ändert sich der Eingriffswinkel der Schleifschnecke über die Länge der Schnecke. Beim diagonalen Wälzschleifen wird die Schleifschnecke in tangentialer Richtung (entlang der Schleifschneckenachse) und in axialer Richtung (axial zur Werkstückachse)am Werkstück vorbeigeführt - dabei sind einem bestimmten Bereich einer Zahnlücke jeweils ein bestimmter Bereich der Schleifschnecke und ein bestimmter Herstellungsachsabstand zugeordnet. Die Schleifschnecke verschiebt sich beim Durchlaufen der Zahnbreite von unten nach oben bzw. von oben nach unten, wobei das zu schleifende Zahnrad auf einer senkrechten Rotationsachse angeordnet ist. Im unteren Bereich der Zahnlücke erfolgt daher eine andere Flankenkorrektur als im oberen Bereich der Zahnlücke. Durch das bekannte Verfahren, welches ausschüeßlich auf einer Änderung der Eingriffswinkel über die Länge der Schleifschnecke beruht, können zwar Verschränkungen eliminiert oder erzeugt werden, allerdings - das haben die Erfinder der Anmelderin festgestellt - treten Proflabweichungen, z. B. Hohlballigkeit durch Verschnitt am Kopf- und Fußbereich des Profils auf. Dabei ist der Verschnitt umso größer, je größer die zu eliminierenden bzw. gezielt zu erzeugenden Verschränkungen sind. Diese Profilabweichungen wirken sich nachteilig auf die Zahnfestigkeit sowie auf das Geräuschverhalten aus.

Es ist Aufgabe der Erfindung, bei einem Verfahren der eingangs genannten Art, welches durch die DE 37 04 607 A1 bekannt wurde, Verschnitt und Profiabweichungen zu minimieren oder zu eliminieren.

Die Aufgabe der Erfindung wird durch die Merkmale des Patentanspruches gelöst.

Erfindungsgemäß wird eine iterative Anpassung des Profils eines Schleifschneckenachsabschnittes bzw. des Profils eines Abrichters (Abrichterprofils) durch zwei nacheinander ablaufende Iterationsverfahren durchgeführt. Dabei wird der kontinuierlich ablaufende Wälzschleifprozess auf der Basis des Durchdringungsprinzips durch Simulation nachgebildet und in mehrere diskrete Verfahrensschritte zerlegt. Bei dieser Simulation durchdringen sich die Hüllfläche oder der Füllkörper der Schleifschnecke und die Flanken des Zahnrades und erzeugen eine Schnittkurve. Bei einer ersten Werkzeugposition wird der resultierende Verschnitt am Zahnprofil durch Berechnung ermittelt und festgestellt. In einem zweiten Iterationsverfahren erfolgt anschließend in Abhängigkeit von dem festgestellten Verschnitt im Kopf und/oder Fußbereich des Zahnes eine Korrektur oder Anpassung des Profils der Schleifschnecke bzw. des Abrichters mit dem Ziel, den Verschnitt zu eliminieren. Diese Berechnungsschleife wird so oft wiederholt, bis das Werkzeug und das Werkstück nicht mehr in Eingriff sind, d. h. kein Verschnitt mehr auftritt. Die so korrigierte Werkzeug kontur entspricht dem gewünschten Profil der Schleifschnecke. Mit dem korrigierten bzw. angepassten Schleifschneckenprofil (Abrichterprofil) lassen sich vorteilhaft Schrägverzahnungen ohne Verschränkung oder mit gezielter Verschränkung ohne Profilabweichung bzw. ohne Verschnitt herstellen. Die Qualität der Verzahnungen, insbesondere ihr Eingriffs- und Geräuschverhalten werden damit wesentlich verbessert.

Ein Ausführungsbeispiel der Erfindung ist in der Zeichnung dargestellt und wird im Folgenden näher beschrieben, wobei sich aus der Zeichnung und/oder der Beschreibung weitere Merkmale und/oder Vorteile ergeben können.

Das erfindungsgemäße Verfahren basiert auf dem durch die DE 37 04 607 A1 bekannten Verfahren zum Wälzschleifen von schräg verzahnten Zahnrädern im kontinuierlichen Diagonalwälzverfahren mit einer Änderung des Eingriffiswinkels zur Eliminierung von Verschränkungen. Wie bereits eingangs erwähnt, können durch das bekannte Verfahren Verzahnungen mit Breitenballigkeit ohne Verschränkungen hergestellt werden, allerdings ergibt sich infolge Verschnitts eine Profilabweichung. Hier setzt die Erfindung ein. Durch eine Anpassung des Schleifscheckenprofils bzw. eines Abrichterprofils, welches beim Abrichten auf die Schleifschnecke übertragen wird, kann der Verschnitt, der sich als unerwünschte Kopfrücknahme und/oder Fußrücknahme darstellt, eliminiert werden. Die Bestimmung oder Auslegung des Profils der Schleifschnecke erfolgt unter Anwendung der Nachbildung des kontinuierlichen Wälzschleifprozesses auf der Basis des Durchdringungsprinzips, d.h. durch Simulation. Das diagonale Wälzschleifen wird durch Betrachtung des kontinuierlich ablaufenden Prozesses in mehreren diskreten Schritten der Wälzbewegung nachgebildet. Die relative Position des Werkzeuges (der Schleifschnecke) zum Werkstück (Zahnrad) in Abhängigkeit von der Kinematik des Schleifprozesses bei einer bestimmten betrachteten Wälzstellung wird berechnet. Mit Hilfe des Durchdringungsprinzips wird die Schnittkurve zwischen dem Werkzeughüllkörper und dem Werkstück gebildet. Anschließend erfolgt die Abtragsberechnung, wobei die resultierenden Zahnlückenstützpunkte sich durch Zurücksetzen der Werkstückkonturpunkte auf die neu ermittelten Schnittpunkt zwischen der Schnittkurve und dem untersuchten Werkstückradius ergeben. Die Berechnungsschleife wird so lange ausgeführt, bis Werkzeug und Werkstück nicht mehr in Eingriff sind.

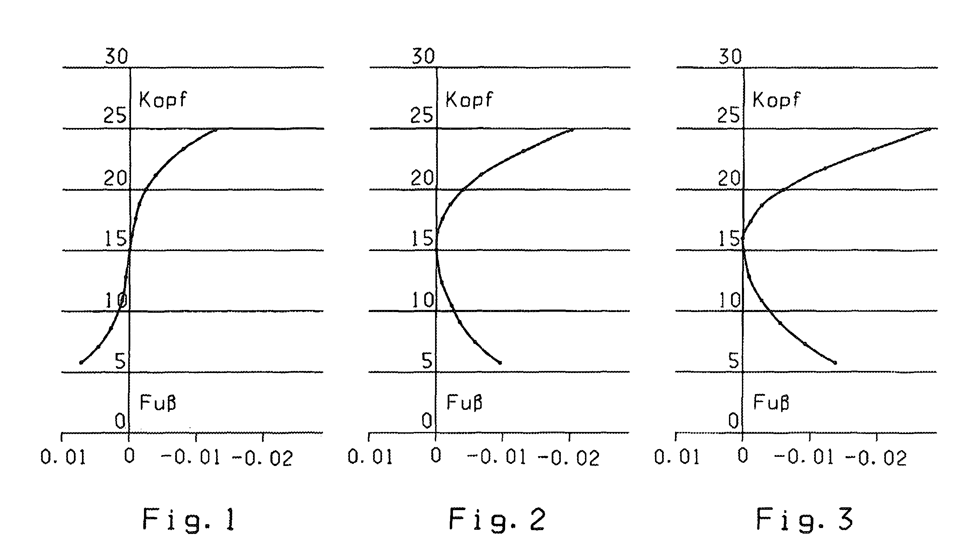

In der Zeichnung ist das Ergebnis des erfindungsgemäßen Verfahrens dargestellt. Die Figuren 1, 2, 3 zeigen verschiedene Formen von erfindungsgemäß ausgelegten Profillinien eines Abrichters bzw. des Schleifschneckenachsabschnittes in Abhängigkeit von verschiedenen zu erzeugenden Verschränkungen. Je nach Verschränkungsrichtung und -betrag muss das Profil im Fuß- und Kopfbereich modifiziert werden.

**Fig. 1** zeigt - dargestellt in einem Profilliniendiagramm - eine Profillinie für eine zu erzeugende Verschränkung von + 60 µm, d. h. der untere Zahnrand und der obere Zahnrad - bezogen auf die senkrechte Rotationsachse des Zahnrades - weisen jeweils eine Profilwinkelabweichung von + 30 µm auf. Im Profilliniendiagramm sind die Profilabweichungen (als Abszisse) über der Wälzlänge (als Ordinate) des unkorrigierten Abrichterprofils aufgetragen. Man erkennt aus der Profillinie, dass das Abrichter- bzw. Schleifschneckenprofil im unteren Zahnbereich (Fuß) positiv und im oberen Zahnbereich (Kopf) negativ korrigiert worden ist, und zwar im Bereich von 0,01 mm.

In **Fig. 2** ist eine Profillinie für eine Verschränkung von - 36 µm dargestellt. Hier ist das Abrichter- bzw. Schleifschneckenprofil im unteren und oberen Zahnbereich negativ korrigiert, d. h. im Fußbereich um ca. 0,01 mm und im Kopfbereich um ca. 0,02 mm.

**Fig. 3** zeigt eine Profillinie für eine Verschränkung von - 60 µm. Hier ist das Werkzeugprofil im unteren und oberen Bereich negativ korrigiert, allerdings im Vergleich zu der Profillinie gemäß Fig. 2 wesentlich stärker, d. h. um ca. 0,015 mm im Fußbereich und um ca. 0,03 mm im Kopfbereich.

Das erfindungsgemäße Verfahren gilt für das kontinuierliche Wälzschleifen sowohl von Beveloidverzahnungen als auch von zylindrischen Verzahnungen.

## Patentansprüche

1. Verfahren zu Bestimmung des Profils einer im Wesentlichen evolventischen Schleifschnecke, welche zum Wälzschleifen von schräg verzahnten Zahnrädern im kontinuierlichen Diagonalwälzverfahren verwendet wird, wobei sich der Achsabstand der Schleifschnecke zum Zahnrad zur Erzeugung einer Breitenballigkeit und der Eingriffswinkel der Schleffschnecke über deren Länge zur Eliminierung von verfahrenbedingten Verschränkungen oder zur Erzeugung gezielter Verschränkungen ändern, **dadurch gekennzeichnet, dass** in einem ersten Iterationsverfahren das kontinuierlich ablaufende Wälzschleifverfahren auf der Basis des Durchdringungsprinzips nachgebildet (simuliert), dabei in mehrere diskrete Verfahrensschritte der Wälzbewegung zerlegt wird, wobei durch Verschneidung des Hüllkörpers der Schleifschnecke mit den Flanken des Zahnrades eine Schnittkurve gebildet wird, und dass der resultierende Verschnitt an der Zahnflanke durch Berechnung ermittelt und dass in einem zweiten anschließenden Iterationsverfahren das Profil der Schleifschnecke oder eines Abrichters zur Eliminierung des ermittelten Verschnitts angepasst wird.

## Claims

1. Method for determining the profile of a substantially involute worm grinding wheel which is used for rolling grinding of helically toothed gearwheels in a continuous diagonal rolling method, the axial distance of the worm grinding wheel from the gearwheel changing in order to generate width crowning, and the pressure angle of the worm grinding wheel changing over its length in order to eliminate method-induced twists or in order to generate deliberate twists, **characterized in that**, in a first iteration method, the continuously proceeding rolling grinding method is copied (simulated) on the basis of the penetration principle, at the same time being decomposed into a plurality of discrete method steps of the rolling movement, a cutting curve being forced by the overlap of the enveloping body of the worm grinding wheel with the flanks of the gearwheel, and **in that** the resulting overlap on the tooth flank is determined by calculation, and **in that**, in a second subsequent iteration method, the profile of the worm grinding wheel or of a trueing device is adapted in order to eliminate the overlap determined.

## Revendications

1. Procédé de détermination du profil d'une vis sans fin de rectification, sensiblement à développante, qui est utilisée pour la rectification en développante de roues dentées à dentures obliques dans un procédé continu de laminage diagonal, l'entraxe de la vis sans fin de rectification par rapport à la roue dentée étant modifié pour produire un bombement en largeur et l'angle d'engagement de la vis sans fin de rectification étant modifié sur sa longueur pour éliminer des emboîtements dus au procédé ou pour produire des emboîtements spécifiques, **caractérisé en ce que** dans un premier procédé d'itération, le procédé de rectification en développante se déroulant en continu est reproduit (simulé) sur la base du principe de pénétration, en l'occurrence est décomposé en plusieurs étapes de procédé discrètes du mouvement de laminage, par intersection du corps d'enveloppe de la vis sans fin de rectification avec les flancs de la roue dentée, une courbe de taille étant formée, et **en ce que** l'erreur de coupe résultante est déterminée par calcul au niveau des flancs des dents et **en ce que** dans un deuxième procédé d'itération subséquent, le profil de la vis sans fin de rectification ou d'un dresseur est adapté pour éliminer l'erreur de coupe déterminée.
